# EUROPEAN PATENT APPLICATION

(11) **EP 4 572 428 A1**
(43) Date of publication of application: **18.06.2025**
(21) Application number: 24219811.7
(22) Date of filing: 13.12.2024
(51) Int. Cl.: H04W 52/02, H04L 5/00, H04W 72/00, H04W 76/00, H04W 84/00, H04W 92/00

(54) **A COMMUNICATION APPARATUS, A CONTROL METHOD FOR CONTROLLING A COMMUNICATION APPARATUS, AND A PROGRAM**

(30) Priority: 14.12.2023 JP 2023210833; 30.09.2024 JP 2024170037
(71) Applicant: CANON KABUSHIKI KAISHA, Tokyo 146-8501 (JP)
(72) Inventor: MAEDA, Takumi, Tokyo, 146-8501 (JP); YAGI, Yuichi, Tokyo, 146-8501 (JP)
(74) Representative: Canon Europe Limited

(57) **Abstract**

A communication apparatus includes control means that executes a predetermined process of controlling whether to execute first communication using a plurality of communication links having links of a first number s between an external apparatus and a communication apparatus established by a communication function compliant with an Institute of Electrical and Electronics Engineers (IEEE) 802.11 series standard or execute second communication using one or more links having links of a second number smaller than the first number of links between the external apparatus and the communication apparatus established by a communication function compliant with the IEEE 802.11 series standard, as communication between the external apparatus and the communication apparatus, based on whether the communication apparatus is in a sleep state.

## Description

### TECHNICAL FIELD

The present disclosure relates to a communication apparatus, a control method for controlling a communication apparatus, and a program.

### BACKGROUND

### Description of the Related Art

There is a technique for, in an extended service set (ESS) composed of a plurality of access points (APs), dynamically switching a connection destination AP so that an AP and a station (STA) efficiently exchange data. Based on the congestion of an AP to which an STA is connected, the vacancy of another AP, and a radio wave situation, if it is determined that a connection destination AP is to be switched, the AP to which the STA is currently connected transmits a connection destination AP change request to the STA. If the STA receives the AP change request, the STA can connect to an appropriate AP by switching the connection destination AP according to the request.

Japanese Patent Application Laid-Open No. 2018-50133 discusses the following technique as a process in which a router having the function of an AP requests a wireless slave apparatus to which the router is currently connected to change a connection destination. A mobile router (MR1) connectable to a plurality of wireless slave apparatuses confirms whether a wireless slave terminal is compliant with Institute of Electrical and Electronics Engineers (IEEE) 802.11v. The determination of whether the wireless slave terminal is compliant with IEEE 802.11v can be made based on an association request frame transmitted from the wireless slave terminal to the mobile router MR1 when the wireless slave terminal wirelessly connects to the mobile router MR1. If the wireless slave terminal is compliant with IEEE 802.11v, the mobile router MR1 transmits a basic service set (BSS) transition management (BTM) request frame to the corresponding wireless slave terminal. In a BSS Transition Candidate List Entries field of the BTM request frame, a BSS identifier (ID) of a master apparatus router RT2 is specified as a connection destination. This urges the slave terminal to switch the connection destination, and the wireless slave terminal switches the connection destination from the mobile router MR1 to the master apparatus router RT2 according to the received BTM request frame.

The present disclosure is directed to more appropriately controlling the execution of wireless communication.

### SUMMARY

According to a first aspect there is provided a communication apparatus for operating in any one of a plurality of states including a first state, a second state where power consumption is smaller than in the first state, and a third state where power consumption is smaller than in the first and second states. The communication apparatus comprising: a setting means (e.g., a setting unit) configured to set a predetermined function to enabled or disabled (e.g., either an enabled condition/state, or a disabled condition/state); a communication means (e.g., a communication unit) configured to communicate using a communication module (e.g., a communication unit/element/module) configured to execute communication compliant with an Institute of Electrical and Electronics Engineers (IEEE) 802.11 series standard; and a first control means (e.g., a first control unit) configured to, based on satisfaction of a predetermined condition for transitioning to a state where power consumption is smaller than in the first state in which the communication apparatus is operating in the first state, a first number of communication links (e.g., a first set, or group comprising one or more communication links) through multi-link communication compliant with an IEEE 802.11be standard are established between the communication module and an external apparatus, and the predetermined function is set to enabled, control the communication apparatus so that the communication apparatus operates in the second state and a second number of communication links smaller than the first number are established between the communication module and the external apparatus, and based on the satisfaction of the predetermined condition in a state where the communication apparatus is operating in the first state, the first number of communication links are established between the communication module and the external apparatus, and the predetermined function is set to disabled, control the communication apparatus so that the communication apparatus operates in the third state and a communication link is not established between the communication module and the external apparatus.

According to a second aspect there is provided a control method for controlling a communication apparatus that operates in any of a plurality of states including a first state, a second state where power consumption is smaller than in the first state, and a third state where power consumption is smaller than in the first and second states, the control method comprising: setting a predetermined function to enabled or disabled; communicating using a communication module configured to execute multi-link communication compliant with an IEEE 802.11be standard; and based on satisfaction of a predetermined condition for transitioning to a state where power consumption is smaller than in the first state in a state where the communication apparatus is operating in the first state, a first number of communication links through the multi-link communication are established between the communication module and an external apparatus, and the predetermined function is set to enabled, controlling the communication apparatus so that the communication apparatus operates in the second state and a second number of communication links smaller than the first number are established between the communication module and the external apparatus through the multi-link communication, and based on the satisfaction of the predetermined condition in a state where the communication apparatus is operating in the first state, the first number of communication links are established between the communication module and the external apparatus, and the predetermined function is set to disabled, controlling the communication apparatus so that the communication apparatus operates in the third state and a communication link is not established between the communication module and the external apparatus through the multi-link communication.

According to a third aspect there is provided a program for causing a computer of a communication apparatus that operates in any of a plurality of states including a first state, a second state where power consumption is smaller than in the first state, and a third state where power consumption is smaller than in the first and second states to: set a predetermined function to enabled or disabled; communicate using a communication module configured to execute multi-link communication compliant with an IEEE 802.11be standard; and based on satisfaction of a predetermined condition for transitioning to a state where power consumption is smaller than in the first state in a state where the communication apparatus is operating in the first state, a first number of communication links through the multi-link communication are established between the communication module and an external apparatus, and the predetermined function is set to enabled, control the communication apparatus so that the communication apparatus operates in the second state and a second number of communication links smaller than the first number are established between the communication module and the external apparatus through the multi-link communication, and based on the satisfaction of the predetermined condition in a state where the communication apparatus is operating in the first state, the first number of communication links are established between the communication module and the external apparatus, and the predetermined function is set to disabled, control the communication apparatus so that the communication apparatus operates in the third state and a communication link is not established between the communication module and the external apparatus through the multi-link communication.

According to single-link communication techniques the transmission and reception of data are delayed compared to multi-link communication, which can lead to a decrease in usability. The newly formulated IEEE 802.11be standard achieves multi-link communication in which a plurality of wireless links is established between a communication device as an AP and another communication device as an STA via a plurality of different frequency channels, and the communication devices communicate with each other in parallel using these links. In an environment where communication using a plurality of links can be used, more appropriate control of the execution of communication using the plurality of links is desired. Embodiments of the present invention advantageously determine whether to perform multi-link communication using predetermined criteria. In this manner, it is possible to reduce the exchange of information to the minimum necessary, thereby reducing the overhead and the power consumption and reliability of the communication apparatus (e.g., by not performing unnecessary multi-link communications and preventing a shared resource from being wastefully used).

Optional features of the disclosure will now be set out, which are applicable to one or more of the above-described aspects.

The communication apparatus may further comprise a second control means (e.g., a second control unit) configured to control the communication apparatus so that the communication apparatus operates in the first state. The second control means may be configured to control the apparatus so that the first number of communication links through the multi-link communication are established between the communication module and the external apparatus. The second control means may be configured to control the communication apparatus after the communication apparatus is controlled (e.g., by the first control unit) so that the communication apparatus operates in the second state and the second number of communication links are established between the communication module and the external apparatus, and based on execution of communication using the second number of communication links.

The communication apparatus may further comprise a third control means configured to control the communication apparatus so that the communication apparatus operates in the first state. The second control means may be configured to control the communication apparatus so that the first number of communication links through the multi-link communication are established between the communication module and the external apparatus. The second control means may be configured to control the communication apparatus after the communication apparatus is controlled (e.g., by the first control means) so that the communication apparatus operates in the third state and a communication link is not established between the communication module and the external apparatus, and based on an operation on a power button of the communication apparatus.

The second number (e.g., of communication links) may be one. In this way, the second number (or set) of communication links includes only one communication link.

The predetermined condition may include a continuation of a state where an operation is not performed on the communication apparatus for at least a predetermined time (e.g., the predetermined time or, optionally, more than the predetermined time).

The second state may be a state where power is supplied to the communication module.

The third state may be a state where power is not supplied to the communication module.

The communication apparatus may further comprise a fourth control means (e.g., a fourth control unit) configured to, in a case where the communication apparatus is operating in the first state, and based on another factor different from a factor indicating whether the communication apparatus is in a sleep state, control the communication apparatus so that the first number of communication links through the multi-link communication are established between the communication module and the external apparatus, or control the communication apparatus so that a third number of communication links smaller than the first number are established between the communication module and the external apparatus.

The third number (e.g., of communication links) may be the same as the second number (e.g., of communication links).

Another factor may include a communication quality of communication using at least one link between the external apparatus and the communication apparatus (e.g., the communication means, optionally the communication module). Based on a state where the communication quality is a first quality, the communication apparatus may be controlled so that the third number of communication links are established between the communication module and the external apparatus.

According to a state where the communication quality is a second quality poorer than the first quality, the communication apparatus may be controlled so that the first number of communication links through the multi-link communication are established between the communication module and the external apparatus.

Another factor may include a factor indicating whether the communication apparatus is currently executing a process/operation/job (e.g., a print job or a scan job). Based on a state where the communication apparatus is not currently executing a process, the communication apparatus may be controlled so that the third number of communication links are established between the communication module and the external apparatus. Based on a state where the communication apparatus is currently executing a process, the communication apparatus may be controlled so that the first number of communication links through the multi-link communication are established between the communication module and the external apparatus.

Another factor may include a factor indicating whether the communication apparatus is in a state where the communication apparatus is executing a User Datagram Protocol (UDP) communication. According to a state where the communication apparatus is in a state where the communication apparatus is not executing UDP communication, the communication apparatus may be controlled so that the third number of communication links are established between the communication module and the external apparatus. According to a state where the communication apparatus is in the state where the communication apparatus is executing UDP communication, the communication apparatus may be controlled so that the first number of communication links through the multi-link communication are established between the communication module and the external.

The communication apparatus may be configured to operate as a station in the multi-link communication.

The first number of communication links may include a communication link using a first frequency band and a communication link using a second frequency band different from the first frequency band.

The first number of communication links may include a communication link using a 6 GHz frequency band.

Based on reception of an instruction to enable the predetermined function or an instruction to disable the predetermined function, the predetermined function may be set to enabled or disabled. The instruction to enable the predetermined function, or the instruction to disable the predetermined function, may be received by a user operation on the communication apparatus. The instruction to enable the predetermined function, or the instruction to disable the predetermined function, may be received through communication with an information processing apparatus outside the communication apparatus.

The communication apparatus may further comprise a printing unit configured to execute printing.

Further features of the present disclosure will become apparent from the following description of example embodiments with reference to the attached drawings.

### BRIEF DESCRIPTION OF THE DRAWINGS

Fig. 1 is a diagram illustrating an example of a configuration of a network.
Fig. 2 is a sequence diagram when multi-link communication is performed.
Fig. 3 is a diagram illustrating a format of a Reduced Neighbor Report (RNR) element.
Fig. 4 is a diagram illustrating an example of a hardware configuration of each of an access point (AP) and stations (STAs).
Fig. 5 is a diagram illustrating an example of a functional configuration of each of the AP and the STAs.
Figs. 6A and 6B are flowcharts of a process of determining whether to perform multi-link communication according to a first example embodiment.
Fig. 7 is a flowchart of a process of determining whether to perform multi-link communication according to a second example embodiment.
Fig. 8 is a diagram illustrating an example of a configuration and a storage area of a storage unit included in each of the STAs.

### DETAILED DESCRIPTION

In the following description, example embodiments of the present disclosure will be described with reference to the accompanied drawing. A plurality of features is described in the example embodiments described below. However, not all of the plurality of features are essential for the present disclosure, and the plurality of features may be arbitrarily combined. Furthermore, in the accompanied drawings, identical or similar components are assigned identical reference numerals, and description thereof are omitted.

With reference to the attached drawings, example embodiments of the present disclosure will be described in detail below.

### (Configuration of Wireless Communication System)

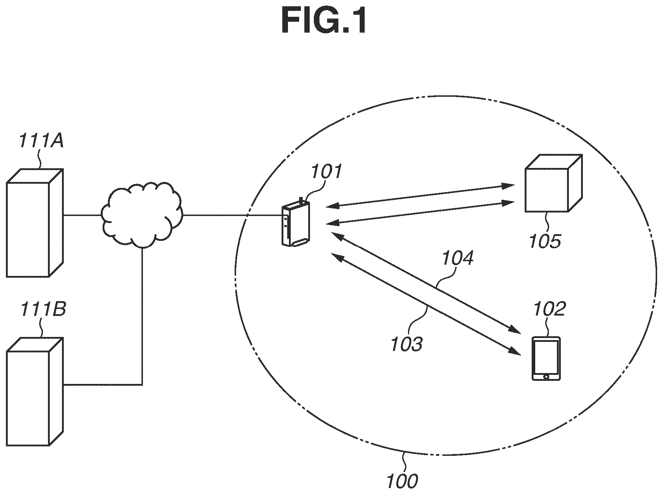

Fig. 1 illustrates an example of the configuration of a communication network according to the present example embodiment. Fig. 1 illustrates a configuration including a single access point (AP) 101 and two wireless slave apparatuses 102 and 105. A wireless slave apparatus is a station and will hereinafter be referred to as an "STA". In the present example embodiment, each of the AP 101 and the STAs 102 and 105 corresponds to a single apparatus. That is, specifically, for example, the AP 101 is a single external apparatus and is a single wireless local area network (LAN) router. Specifically, for example, each of the STAs 102 and 105 is a single printer. As illustrated in Fig. 1, a communication network formed by the AP 101 is indicated by a circle 100. The AP 101 and the STAs 102 and 105 can transmit and receive a signal to and from each other. Hereinafter, a communication network composed of wireless communication will occasionally be referred to simply as a "network" or a "wireless network". Each of the STAs 102 and 105 will occasionally be referred to as a "slave apparatus", a "wireless slave apparatus", or a "wireless terminal". Each of the AP 101 and the STAs 102 and 105 will occasionally be referred to as a "communication apparatus" or a "communication device".

The STAs 102 and 105 participate in a network formed by the AP 101, and the AP 101 and the STAs 102 and 105 can execute wireless communication compliant with the Institute of Electrical and Electronics Engineers (IEEE) 802.11be (Extremely High Throughput (EHT)) standard. EHT may also be interpreted as the abbreviation of Extreme High Throughput. The IEEE 802.11be is also referred to as "Wi-Fi^{®} 7". In EHT, each communication apparatus can communicate at frequencies in the 2.4 GHz band, the 5 GHz band, and the 6 GHz band. The frequency bands used by each communication apparatus are not limited to these, and a different frequency band such as the 60 GHz band may be used. The AP 101 and the STAs 102 and 105 can communicate using 20 GHz, 40 MHz, 80 MHz, 160 MHz, and 320 MHz bandwidths. The bandwidths used by each communication apparatus are not limited to these, and a different bandwidth such as a 240 MHz or 4 MHz bandwidth may be used.

Although the AP 101 and the STAs 102 and 105 are compliant with the IEEE 802.11be standard, in addition to the IEEE 802.11be standard, the AP 101 and the STAs 102 and 105 may be compliant with legacy standards that are standards before the IEEE 802.11be standard, or may be compliant with succession standards of the IEEE 802.11be standard. Specifically, the AP 101 and the STA 102 may be compliant with at least any one of the IEEE 802.11 a/b/g/n/ac/ax standards. In addition to the IEEE 802.11 series standard, the AP 101 and the STA 102 may also be compliant with another communication standard such as Bluetooth^{®}, near-field communication (NFC), ultra-wideband (UWB), Zigbee, or MultiBand orthogonal frequency-division multiplexing Alliance (MBOA). UWB includes Wireless Universal Serial Bus (USB), Wireless 1394, and WiNET. The AP 101 may also be compliant with a wired communication standard for a wired local area network (LAN). Specific examples of the AP 101 include a wireless LAN router, a personal computer (PC), and a single-function access point. The present disclosure, however, is not limited to these. Alternatively, the AP 101 may be an information processing apparatus such as a wireless chip capable of executing wireless communication compliant with the IEEE 802.11be standard. Specific examples of the STA 102 include a camera, a tablet terminal, a smartphone, a PC, a mobile phone, a video camera, and a headset. The present disclosure, however, is not limited to these. Alternatively, the STA 102 may be an information processing apparatus such as a wireless chip capable of executing wireless communication compliant with the IEEE 802.11be standard. Specific examples of the STA 105 include an image forming apparatus having multiple functions of a printer that forms an image and a scanner that reads an image.

The STA 105 is an image forming apparatus such as a single-function printer or a digital multifunction peripheral including a printer and a scanner that optically reads an image. This image forming apparatus is an STA relative to the AP 101 and therefore is referred to as the "STA 105" and occasionally referred to also as the "communication apparatus 105". The STA 105 is connected to the AP 101 through communication compliant with the IEEE 802.11be standard. The unit of processing specific to the image forming apparatus such as image formation or image reading executed by the STA 105 is referred to as a "job", and the STA 105 can execute in parallel a plurality of jobs in which resources to be used do not conflict with each other. For example, the STA 105 can execute in parallel a scan job and a print job in which a scanner is not used.

Servers 111A and 111B are so-called cloud servers placed on the Internet. One or both of the servers 111A and 111B have the function of a print server that saves print data received from a terminal and transmits the print data to the STA 105 according to a request from the STA 105 or without a request. Although the servers 111A and 111B are cloud servers in this case, the servers 111A and 111B may be connected to the AP 101 through wireless communication compliant with the IEEE 802.11be. The servers 111A and 111B may be servers that provide services other than that of a print server. In the following description, the description of the STA 102 is also applied to the STA 105, which is an image forming apparatus. Alternatively, only either one of the servers 111A and 111B may exist, or three or more servers may exist.

The AP 101 and the STAs 102 and 105 also execute multi-link communication in which the AP 101 and the STAs 102 and 105 establish a plurality of links via a plurality of frequency channels and communicate with each other. An AP corresponding to a single apparatus that executes multi-link communication includes a plurality of virtual APs, and an STA corresponding to a single apparatus that executes multi-link communication includes a plurality of virtual STAs. Thus, the AP corresponding to the single apparatus is also referred as an "AP multi-link device (AP MLD)", and the STA corresponding to the single apparatus is also referred as an "STA multi-link device (STA MLD)". The STA MLD is occasionally referred to also as a "non-AP MLD". Each of the AP MLD and the STA MLD is occasionally referred to also as a "communication apparatus" or a "communication device". Then, a virtual AP is referred to as an "affiliated AP (participating AP)", and a virtual STA is referred to as an "affiliated STA (participating STA)". The plurality of affiliated APs included in the single AP MLD is APs that communicate using different channels. Similarly, the plurality of affiliated STAs included in the single STA MLD is STAs that communicate using different channels. The IEEE 802.11 series standard defines the bandwidths of frequency channels as 20 MHz. The "frequency channels" refer to frequency channels defined by the IEEE 802.11 series standard, and the IEEE 802.11 series standard defines a plurality of frequency channels in frequency bands such as the 2.4 GHz band, the 5 GHz band, the 6 GHz band, and the 60 GHz band. Thus, the plurality of affiliated APs and the plurality of affiliated STAs use any of the above frequency channels. A bandwidth of 40 MHz or more may be used in a single frequency channel by bonding a frequency channel and an adjacent frequency channel. For example, the AP 101 can establish a link 103 via a first frequency channel in the 5 GHz band with the STA 102 and communicate with the STA 102. The STAs 102 and 105 can establish a link 104 via a second frequency channel in the 6 GHz band with the AP 101 in parallel with the link 103 and communicate with the AP 101. In this case, the STAs 102 and 105 execute multi-link communication in which the link 104 via the second frequency channel is maintained in parallel with the link 103 via the first frequency channel. Hereinafter, in a case where the AP 101 and the STAs 102 and 105 support multi-link communication, the AP 101 will be referred to as the "AP MLD 101" to distinguish the AP 101 from individual APs included in the AP 101, and the STAs 102 and 105 will be referred to as the "STA MLDs 102 and 105" to distinguish the STAs 102 and 105 from individual STAs included in the STAs 102 and 105. If, however, the AP 101 and the STAs 102 and 105 may not be confused with the individual APs and STAs, the AP 101 is referred to as the "AP 101", and the STAs 102 and 105 are referred to as the "STAs 102 and 105".

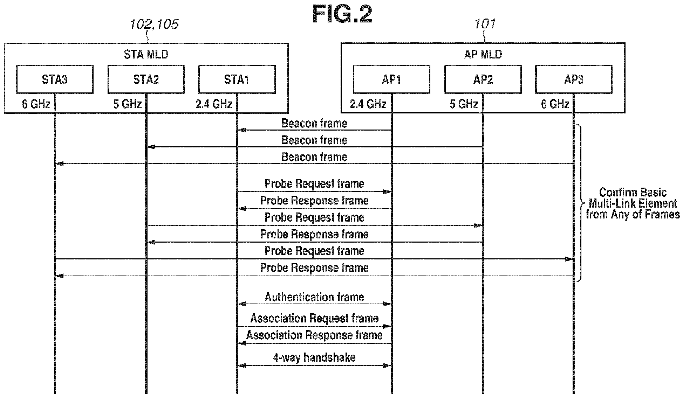

Fig. 2 illustrates an example of a sequence diagram when multi-link communication is performed. In Fig. 2, affiliated APs are represented by adding numbers after "AP" as in "AP 1", "AP 2", ..., and affiliated STAs are represented by adding numbers after "STA" as in "STA 1", "STA 2", ... That is, for example, in Fig. 2, the AP MLD 101 includes an AP 1 as a first AP, an AP 2 as a second AP, and an AP 3 as a third AP. Each of the STA MLDs 102 and 105 includes an STA 1 as a first STA, an STA 2 as a second STA, and an STA 3 as a third STA. The AP 1 and the STA 1 establish a first link using a first frequency channel. The AP 2 and the STA 2 establish a second link using a second frequency channel. The AP 3 and the STA 3 establish a third link using a third frequency channel. In the present example embodiment, a connection between an affiliated STA and an affiliated AP is referred to as a "link". Although in the example of Fig. 2, the first to third frequency channels are the 2.4 GHz band, the 5 GHz band, and the 6 GHz band, respectively, the first to third frequency channels may be other available frequency bands. In this case, the number of APs included in the AP MLD 101 is not limited to three, and may be a number according to the available frequency bands. The same applies to the STA MLDs 102 and 105. As described above, an AP associated with each frequency band in which data can be communicated is referred to as an "affiliated AP", and an STA associated with each frequency band in which data can be communicated is referred to as an "affiliated STA".

For example, an affiliated AP and an affiliated STA may be set in advance among the APs included in the AP MLD 101 and the STAs included in the STA MLDs 102 and 105 by a user such as an administrator. The determination of whether to make connections using multiple links is made based on a Basic Multi-Link element. An AP MLD transmits a Basic Multi-Link element by including the Basic Multi-Link element in a beacon or a probe response to a probe request from an STA. An STA MLD determines whether a Basic Multi-Link element is included in a beacon or a probe response emitted from any affiliated AP, and determines whether the affiliated AP is included in an AP MLD. If a Basic Multi-Link element is included, the STA MLD can determine that the transmission source AP is an AP MLD.

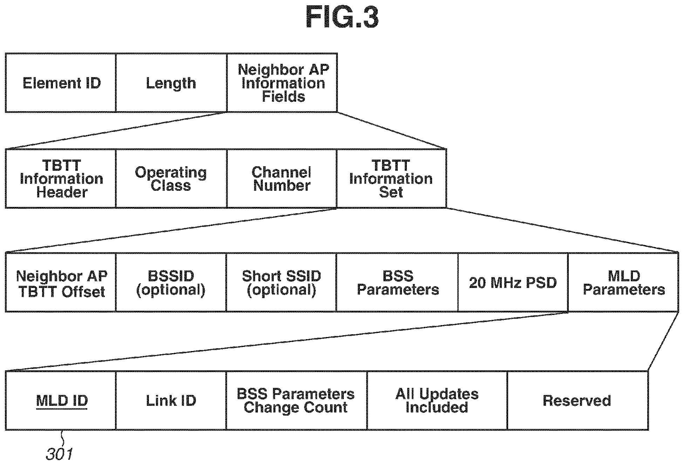

If the communication partner AP (hereinafter referred to as an "opposing AP") is an AP MLD, the STA MLD acquires channel information regarding the frequency band and channel of another affiliated AP belonging to the same AP MLD from a Reduced Neighbor Report (RNR) element included in the acquired beacon or probe response. Based on the fact that an MLD identifier (ID) included in the RNR element is 0, the STA MLD determines that the opposing AP is the same AP MLD. Fig. 3 illustrates the format of the RNR element. As illustrated in Fig. 3, the RNR element includes an MLD ID 301. The STA MLD switches to the frequency band and channel indicated by the acquired channel information, acquires detailed information regarding affiliated APs, and connects to desired affiliated APs, using multiple links based on the detailed information. If the opposing AP is not an AP MLD, the STA MLD connects to the opposing AP via a single frequency channel. When the STA 102 or 105 and the AP 101 establish a connection, first, the STA 1 requests authentication from the AP 1 using an authentication frame. If the authentication is successful, the STA 1 transmits an association request to the AP 1. The AP 1 returns an association response, and the STA 1 and the AP 1 are associated with each other. Then, the STA 1 and the AP 1 perform 4-way handshake and install an encryption/decryption key.

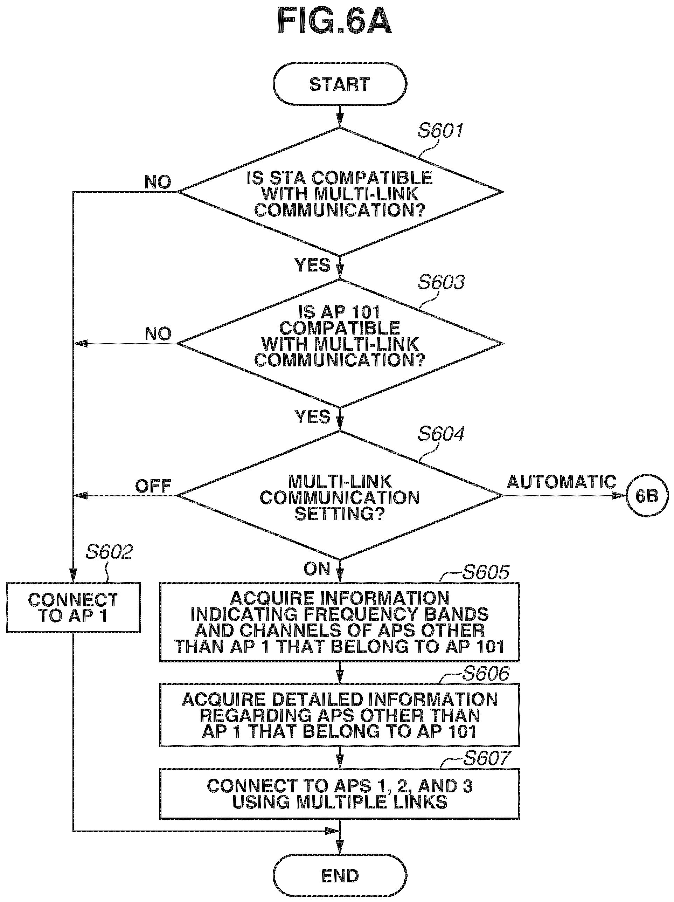

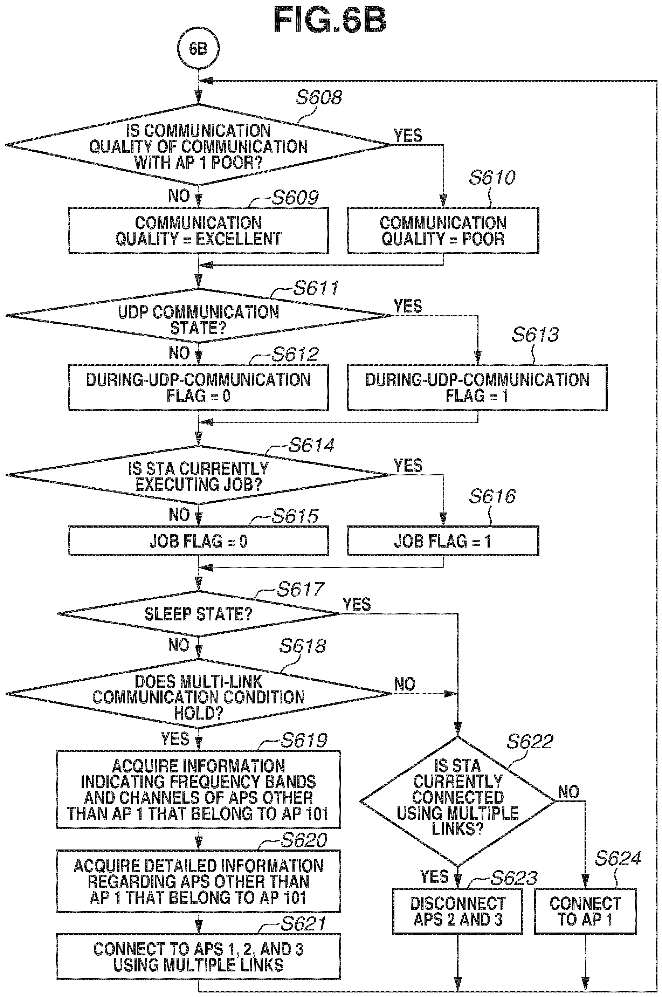

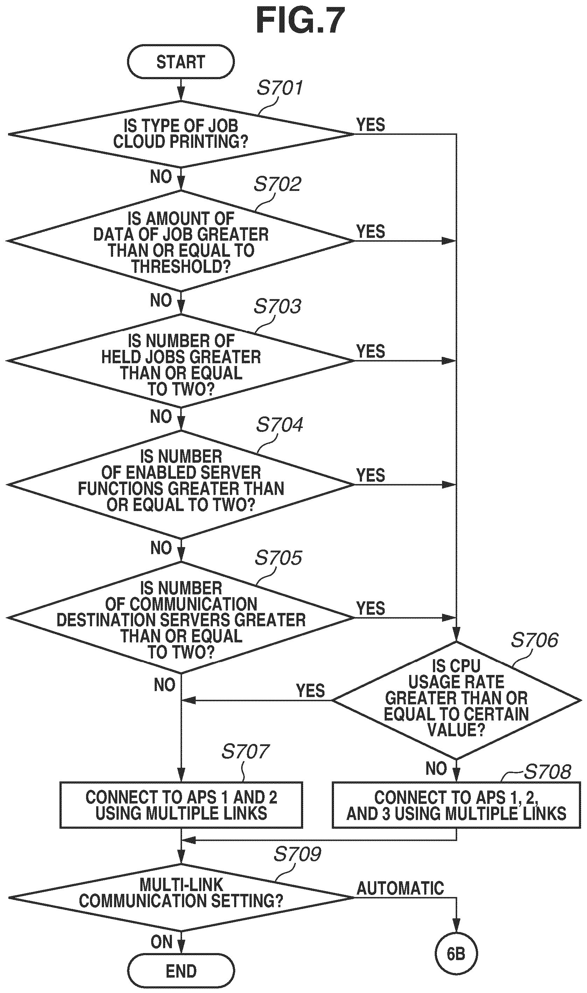

As described above, a plurality of links via a plurality of frequency channels is established between the AP 101 and the STAs 102 and 105, whereby it is possible to improve the throughput in communication between the AP 101 and each of the STAs 102 and 105. In the present example embodiment, as will be described below in first and second example embodiments, even if a beacon or a probe response received by the STA 102 or 105 indicates that the AP 101 is an AP MLD, the STA 102 or 105 does not unconditionally set multiple links. Then, the STAs 102 or 105 sets multiple links orchange the number of multiple links according to the situation. This will be described with reference to Figs. 6A, 6B, and 7.

As a link between communication devices, a plurality of links different from each other in frequency band may be established in multi-link communication. For example, the AP 101 and the STA 102 may establish a third link in the 2.4 GHz band in addition to the link 103 in the 5 GHz band and the link 104 in the 6 GHz band. Alternatively, links may be established via a plurality of different channels included in the same frequency band. For example, ch. 15 in the 6 GHz band may be established as a first link, and in addition to this, ch. 207 in the 6 GHz band may be established as a second link. Links in the same frequency band and links in different frequency bands may coexist. For example, the AP 101 and each of the STAs 102 and 105 may establish a link via ch. 149 in the 5 GHz band and a link via ch. 15 in the 6 GHz band in addition to the link 103 via ch. 36 in the 5 GHz band. The AP 101 establishes a plurality of connections at different frequencies with the STA 102, whereby, even if a certain band is congested, the AP 101 can establish communication with the STA 102 in another band. Thus, the AP 101 can prevent a decrease in the throughput and a communication delay in communication with the STA 102.

### (Configurations of AP and Stas)

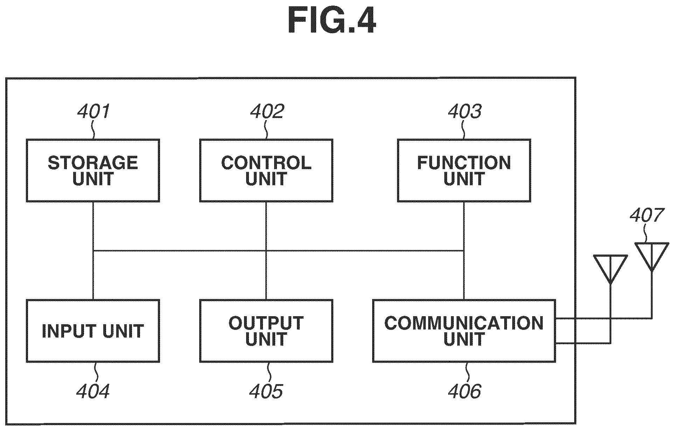

Fig. 4 illustrates an example of the hardware configuration of the AP 101 according to the present example embodiment. The AP 101 includes a storage unit 401, a control unit 402, a function unit 403, an input unit 404, an output unit 405, a communication unit 406, and an antenna 407. The AP 101 may include a plurality of antennas.

The storage unit 401 includes one or more memories such as a non-volatile storage device, e.g., a read-only memory (ROM), and a random-access memory (RAM) and stores computer programs for performing various operations described below, and various types of information such as communication parameters for wireless communication. As the storage unit 401, in addition to the memories such as the ROM and the RAM, a storage medium such as a flexible disk, a hard disk, an optical disc, a magneto-optical disc, a Compact Disc Read-only Memory (CD-ROM), a Compact Disc Recordable (CD-R), a magnetic tape, a non-volatile memory card, or a digital versatile disc (DVD) may be used. Alternatively, the storage unit 401 may include a plurality of memories.

The control unit 402 includes one or more processors such as a central processing unit (CPU) and a microprocessor unit (MPU) and controls the entirety of the AP 101 by executing a computer program stored in the storage unit 401. The control unit 402 may cooperate with a computer program and an operating system (OS) stored in the storage unit 401 to control the entirety of the AP 101. The control unit 402 also generates data and a signal (a wireless frame) to be transmitted through communication with another communication apparatus. Alternatively, the control unit 402 may include a plurality of processors such as multi-core processors and control the entirety of the AP 101 using the plurality of processors.

The control unit 402 also controls the function unit 403 to execute a predetermined process such as wireless communication, the capturing of an image, printing, or projection. The function unit 403 is hardware for the AP 101 to execute the predetermined process.

The input unit 404 receives various operations from the user. The output unit 405 provides various outputs to the user through a monitor screen or a loudspeaker. The outputs provided by the output unit 405 may be display on the monitor screen, the output of a sound from the loudspeaker, or the output of a vibration. Both the input unit 404 and the output unit 405 may be achieved by a single module as a touch panel. Each of the input unit 404 and the output unit 405 may be integrated with or separate from the AP 101.

The communication unit 406 controls wireless communication compliant with the IEEE 802.11be standard. In addition to the IEEE 802.11be standard, the communication unit 406 may also control wireless communication compliant with another IEEE 802.11 series standard, or control wired communication via a wired LAN. The communication unit 406 controls the antenna 407 to transmit and receive a wireless signal for wireless communication generated by the control unit 402.

In a case where the AP 101 is compliant with the NFC standard or the Bluetooth^{®} standard in addition to the IEEE 802.11be standard, the AP 101 may control wireless communication compliant with these communication standards. In a case where the AP 101 can execute wireless communication compliant with a plurality of communication standards, the AP 101 may individually include a communication unit and an antenna compliant with each communication standard. The AP 101 communicates data such as image data, document data, or video data with a partner apparatus via the communication unit 406. The antenna 407 may be configured separately from the communication unit 406, or may be configured together with the communication unit 406 as a single module.

The antenna 407 is an antenna capable of communicating in the 2.4 GHz band, the 5 GHz band, and the 6 GHz band. Although the AP 101 includes two antennas in the present example embodiment, the AP 101 may include three antennas. Alternatively, the AP 101 may include a different antenna with respect to each frequency band. In a case where the AP 101 includes a plurality of antennas, the AP 101 may include a communication unit 406 corresponding to each antenna.

Each of the STAs 102 and 105 has a hardware configuration similar to that of the AP 101 illustrated in Fig. 4. For example, the STA 105 is an image forming apparatus, and therefore may include an image forming unit (a printer unit) using an inkjet method or an electrophotographic method, a reading unit (a scanner unit) that reads an image recorded on a document such as paper, and control units for these units in addition to the components in Fig. 4. Further, the STA 105 may include an image processing unit that processes an image to be recorded or a read image, and a storage unit that stores print data received from a terminal or a server. Regarding the STA 105, the components illustrated in Fig. 4 are referred to as a "controller unit" by distinguishing the components from the components specific to the image forming apparatus, such as the image forming unit and the scanner unit. Although the STA 102 is similar to the STA 105, the STA 102 may be an apparatus different from the STA 105. For example, the STA 102 may include at least one of a printer unit that prints image data on a medium, and a scanner unit that reads a document. The STA 102 may also include a camera unit that captures an image. That is, the STA 102 may be an image processing apparatus such as a printer, a scanner, or a multifunction peripheral (MFP), or may be a mobile terminal such as a smartphone or a tablet, a camera, or a PC.

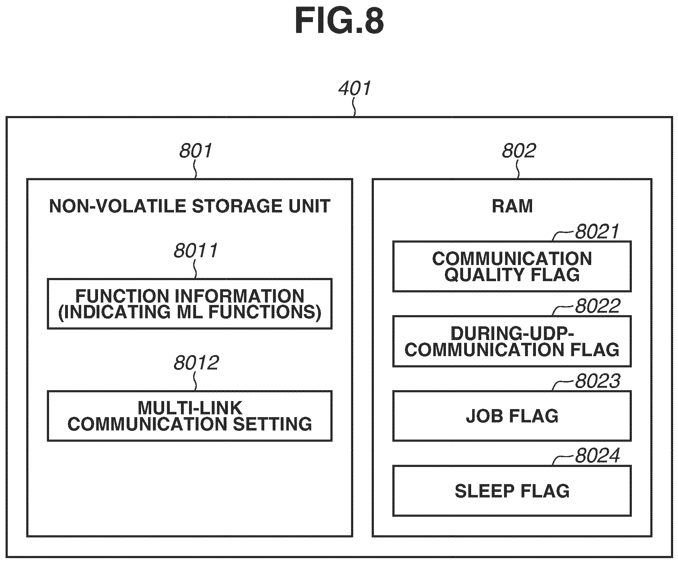

Fig. 8 illustrates an example of the configuration and the storage area of the storage unit 401 included in each of the STAs 102 and 105 according to the present example embodiment. The storage unit 401 includes a non-volatile storage unit 801 and a RAM 802. The non-volatile storage unit 801 includes function information 8011 indicating functions included in the STA 102 or 105, and a multi-link communication setting 8012 set by the user, for example. The function information 8011 includes multi-link compatibility information indicating whether the STA 102 or 105 supports multi-link communication. The multi-link communication setting 8012 is set through a user interface included in the STA 102 or 105 by the user or is remotely set through communication by the user. The setting value of the multi-link communication setting 8012 is any of "perform multi-link communication" (on), "not perform multi-link communication" (off), and "automatically determine whether to perform multi-link communication". The RAM 802 includes a communication quality flag 8021 indicating whether the latest communication quality of communication with an opposing AP is excellent, and a during-UDP-communication flag 8022 indicating that User Datagram Protocol (UDP) communication is currently performed. Further, the RAM 802 includes a job flag 8023 indicating that the STA is currently executing a job in a case where the STA is the image forming apparatus 105, and a sleep flag 8024 indicating that the STA 102 or 105 is in a sleep state. The "sleep state" refers to a power saving state where the STA 102 or 105 returns to a normal operation state according to the reception of a signal or an operation input. Examples of the sleep state include the state where the supply of power to the components except for the controller unit (see Fig. 4) of the image forming apparatus 105 is stopped. For example, if a predetermined time elapses after a job is completed, the image forming apparatus 105 transitions from the normal operation state to the sleep state. If some message is received or an operation is performed through a user interface (UI), the image forming apparatus 105 transitions from the sleep state to the normal operation state. The sleep state is not limited to the above description, and there is also a case where the clock rate of the CPU is decreased, or the supply of power to the components other than units that receive a signal and receive an operation input, such as the input unit 404 and the communication unit 406, in the controller unit is stopped.

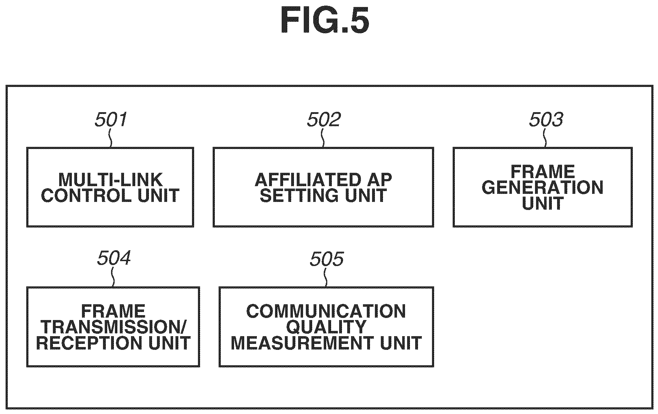

Fig. 5 illustrates a block diagram of the functional configuration of the AP 101 according to the present example embodiment. The functional blocks illustrated in Fig. 5 are achieved by the control unit 402 executing programs for implementing the functions of the hardware components illustrated in Fig. 4 on the hardware components. Although each of the STAs 102 and 105 also has a similar configuration, since the STAs 102 and 105 are STAs, an affiliated AP setting unit 502 is read as an "affiliated STA setting unit", and a setting target is an affiliated STA.

The AP 101 includes a multi-link control unit 501, an affiliated AP setting unit 502, a frame generation unit 503, a frame transmission/reception unit 504, and a communication quality measurement unit 505.

The multi-link control unit 501 is a block that controls a communication start process (a connection process) for the AP 101 to establish one or more links to be used for wireless communication with the STA 102, an addition process and a deletion process on a link after the communication is started, and a communication end process for deleting all the links. Specifically, the connection process includes an authentication process, an association process, and a 4-way-handshake (4WHS) process.

The affiliated AP setting unit 502 selects and determines an affiliated AP in multi-link communication according to settings in each UI unit. The affiliated AP setting unit 502 also notifies the frame transmission/reception unit 504 of an affiliated AP to be used.

The frame generation unit 503 is a block that generates a frame to be transmitted according to the settings of the affiliated AP setting unit 502.

According to affiliated AP information received from the affiliated AP setting unit 502, the frame transmission/reception unit 504 transmits a wireless frame including a beacon/probe response frame or a data frame generated by the frame generation unit 503 and receives a wireless frame from a partner apparatus.

The communication quality measurement unit 505 measures and calculates the communication quality of a beacon/probe response frame received from the frame transmission/reception unit 504. The AP 101 evaluates the quality of a signal received from each of the STAs 102 and 105, and therefore may measure and calculate the communication quality of a frame such as a probe request frame received from the STA 102 or 105. Examples of the information regarding the communication quality to be measured include a received signal strength indicator (RSSI) and a signal-to-noise ratio (SNR). The present disclosure, however, is not limited to these.

Incidentally, if an STA always performs multi-link communication when communicating, the exchange of frames with a plurality of APs occurs. Thus, in a case where communication is not performed or the amount of communication is small, the processing load of the STA may increase, and the communication overhead may become greater and the power consumption may also become greater than in a case where communication is performed using a single link. Thus, it is necessary to determine the state where multi-link communication is required, and switch single-link communication and multi-link communication at an appropriate timing. In a case where the STA 105 performs printing or scanning, the STA 105 needs to receive job data. In a case where the STA 105 uploads the job data from the STA 102, the STA 102 needs to transmit the job data. In such a case, if single-link communication using a single link is performed, the transmission and reception of data are delayed compared to multi-link communication. Thus, there is a possibility that an increase in the job processing time causes a decrease in usability. Accordingly, in the present example embodiment, processing for solving such an issue is executed as described below.

### (Flow of Processing)

Next, a description is given of some example embodiments regarding the flow of processing of the need-based selection of single-link communication and multi-link communication and the determination of the number of links in multi-link communication that are executed by an AP and an STA as described above, particularly the STA, and a sequence in a wireless communication system.

Figs. 6A and 6B illustrate processing until the STA 105 determines whether to perform multi-link communication with the AP 101, using a predetermined criterion. This processing is started when the STA 105 starts to try connecting to the AP 101. This processing is achieved by the control unit 402 of the STA 105, particularly the CPU of the control unit 402, executing a program stored in the storage unit 401. Although the following description is given using the STA 105 as an example, the STA 102 can also execute similar processing. In each of steps related to an image forming apparatus such as steps S614 and S617, the STA 102, which is not an image forming apparatus, may determine that the condition is not satisfied.

First, in step S601, the control unit 402 of the STA 105 determines whether the STA 105 supports multi-link communication. This determination may be made with reference to the information included in the function information 8011 and indicating whether the STA 105 supports multi-link communication. If the STA 105 does not support multi-link communication (NO in step S601), the processing proceeds to step S602. In step S602, the control unit 402 of the STA 105 determines that the control unit 402 of the STA 105 cannot perform multi-link communication. Then, the control unit 402 of the STA 105 connects to only the AP 1 that operates via the same frequency channel as the affiliated STA 1 to be used. That is, the STA 105 connects to the AP 101 in the state where the STA 105 does not execute multi-link communication. If the STA 105 supports multi-link communication (YES in step S601), it is determined that the STA 105 operates on the premise that the STA 105 performs multi-link communication, and the processing proceeds to step S603. In a case where the processing of this flowchart is performed only by the STA 105 that supports multi-link communication, a form may be employed in which step S601 is omitted and the processing is started from step S603. Since only a single link is established in step S601, the link may be established based on the normal IEEE 802.11 standard without using a multi-link communication function compliant with the IEEE 802.11be standard.

In step S603, the control unit 402 of the STA 105 determines whether the AP 101 supports multi-link communication. The determination of whether the AP 101 supports multi-link communication is made based on whether a beacon/probe response frame of the AP 1 acquired by the STA 1 includes a Basic Multi-Link element. A Basic Multi-Link element is present in a beacon/probe response frame of a device that supports multi-link communication and includes information regarding an affiliated AP or an affiliated STA capable of performing multi-link communication.

If the beacon/probe response frame includes a Basic Multi-Link element, the control unit 402 of the STA 105 determines that the AP 101 supports multi-link communication (YES in step S603), and the processing proceeds to step S604. If the beacon/probe response frame of the AP 1 does not include a Basic Multi-Link element (NO in step S603), the processing proceeds to step S602. In step S602, the control unit 402 of the STA 105 determines that the AP 101 is an AP that does not support multi-link communication. Then, the control unit 402 of the STA 105 connects to only the AP 1.

In step S604, the control unit 402 of the STA 105 checks the setting value of the multi-link communication setting 8012. If the multi-link communication setting 8012 is set to off by an operation of the user on the input unit 404 of the STA 105, the processing proceeds to step S602. If the multi-link communication setting 8012 is set to on, the processing proceeds to step S605. If the multi-link communication setting 8012 is set to automatic, the processing proceeds to step S608. Automatic is a setting for dynamically changing whether to perform multi-link communication, according to the state of the STA 105.

If the multi-link communication setting is on, then in step S605, the control unit 402 of the STA 105 acquires information indicating the frequency bands and channels in which the affiliated APs (the APs 2 and 3) other than the AP 1 that belong to the AP 101 are operating. There is a possibility that the Basic Multi-Link element received by the STA 105 also includes information regarding another group of APs that do not belong to the AP 101. Thus, the control unit 402 of the STA 105 determines whether affiliated APs belong to the AP 101, using a Reduced Neighbor Report (RNR) element in the beacon/probe response frame of the AP 1 acquired by the STA 1 (see Fig. 3). The MLD ID 301 is assigned to each group of affiliated APs in the Basic Multi-Link element. If the MLD ID 301 is 0, this indicates that the affiliated APs belong to an AP MLD to which the affiliated AP that emits the beacon/probe response frame acquired by the STA 1 belongs.

Thus, by acquiring information indicating the frequency bands and channels of affiliated APs of which the MLD ID 301 is 0, it is possible to grasp and identify the frequency bands and channels of the APs 2 and 3 other than the AP 1 that are operating in the AP 101.

Further, in step S606, the control unit 402 of the STA 105 switches the frequency bands and channels used for communication to the grasped frequency bands and channels of the APs 2 and 3. Then, the control unit 402 of the STA 105 acquires beacon/probe response frames of the APs 2 and 3 and shares detailed information regarding each of the APs 2 and 3. In step S607, the control unit 402 of the STA 105 connects to the APs 1, 2, and 3 using multiple links. That is, the STA 105 establishes three links as links with the APs 1, 2, and 3, thereby connecting to the AP 101 in a state for executing multi-link communication. As illustrated in Fig. 2, the procedure of the connection includes authentication, association, and 4-way-handshake.

In step S608, the control unit 402 of the STA 105 determines whether the communication quality of communication between the AP 1 and the STA 105 (the communication quality of the AP 1) is poor. That is, in the present example embodiment, the execution of multi-link communication is controlled based on a factor indicating the communication quality of the AP 1. Specifically, the control unit 402 of the STA 105 calculates the communication quality of the AP 1 and determines whether the calculated communication quality of the AP 1 falls below a threshold when the modulation and coding scheme (MCS) 0 that is the minimum rate is used. If the communication quality falls below the threshold (YES in step S608), the processing proceeds to step S610. If not (NO in step S608), the processing proceeds to step S609. The MCS is obtained by indexing the combination of a wireless modulation method and a code rate, and the MCS to be used changes according to the communication environment. The MCS 0 is a method having the lowest throughput and is used in a case where the communication environment is very poor. In the present example embodiment, as a value indicating the communication quality, an RSSI based on a radio wave transmitted from the AP 1 and received by the STA 105 is used. In step S609, if the RSSI is equal to or exceeds the threshold when the MCS 0 is used, the control unit 402 of the STA 105 determines that the communication environment has no problem. Then, the control unit 402 of the STA 105 records "excellent" in the communication quality flag 8021. In step S610, if the RSSI falls below the threshold when the MCS 0 is used, the control unit 402 of the STA 105 records "poor" in the communication quality flag 8021. For example, if the threshold is set to -70 dBm and the RSSI is greater than or equal to -70 dBm, the control unit 402 of the STA 105 sets the communication quality flag 8021 to "excellent". If the RSSI is less than or equal to -71 dBm, the control unit 402 of the STA 105 sets the communication quality flag 8021 to "poor". In a case where an application in which the amount of information regarding a downlink is great is heavily used, the STA 105 may refer to the communication quality of the downlink measured by the STA 105 as a value indicating the communication quality. In a case where the amount of information regarding an uplink is great, the STA 105 may acquire the communication quality of the uplink measured by the AP 101 from the AP 101 and refer to the acquired communication quality. The determination of which of the downlink and the uplink is to be selected to refer to the communication quality may be made with reference to an application that is being executed. For example, in the case of an application which involves the reception of an image or a video or the acquisition of a print job and in which the amount of information regarding the downlink is great, the communication quality of the downlink may be selected as a reference. In the case of an application involving the upload of an image, a video, or a print job, the communication quality of the uplink may be selected as a reference.

Next, in step S611, the control unit 402 of the STA 105 determines whether the STA 105 is in a UDP communication state. That is, in the present example embodiment, the execution of multi-link communication is controlled based on a factor indicating whether the STA 105 is in the UDP communication state. If UDP communication is currently performed (YES in step S611), the processing proceeds to step S613. If UDP communication is not currently performed (NO in step S611), the processing proceeds to step S612. The "UDP communication state" refers to the state where the STA 105 is performing UDP communication that requires real time for a moving image or a sound. UDP communication is one-way communication and has low reliability unlike Transmission Control Protocol (TCP) communication, but at the same time, can transmit data at high speed. Thus, if communication of an application on which the STA 105 is performing UDP communication overlaps communication of another application other than the application, the UDP communication is delayed. Then, if the STA 105 does not perform a transmission/reception process in time, packet loss occurs. During UDP communication, it is possible to reduce the occurrence of a delay using multi-link communication. Besides a moving image or a sound, in a case where the STA 105 is an image forming apparatus such as a multifunction peripheral or a printer, UDP communication is used to transmit and receive an image in Internet Protocol (IP) fax. The "IP fax" refers to the function of communicating through the IP an image printed by fax. In step S611, it may be determined that a packet to be received or a packet to be transmitted is a UDP packet. Alternatively, the determination of whether the STA 105 is in the UDP communication state may be made based on whether an application using the UDP is currently executed. For example, in addition to the IP fax, an application for sound communication, moving image distribution, or web conferencing normally uses the UDP. If any of these particular applications that use the UDP is currently executed, it may be determined that the STA 105 is in the UDP communication state. Examples of the state where the STA 105 is not in the UDP communication state include the state where communication other than UDP communication is being executed, and the state where the STA 105 is not communicating with another apparatus. Then, for example, the communication other than UDP communication is TCP communication. For example, a function in which TCP communication is used is the function of receiving a print job or a scan job from another apparatus or the function of transmitting an image obtained by scanning based on a scan job to another apparatus.

If it is determined in step S611 that the STA 105 is in the UDP communication state, then in step S613, the control unit 402 of the STA 105 records "1" in the during-UDP-communication flag 8022. If it is determined in step S611 that the STA 105 is not in the UDP communication state, then in step S612, the control unit 402 of the STA 105 records "0" in the during-UDP-communication flag 8022. Specifically, for example, if the control unit 402 of the STA 105 starts transmitting and receiving an image by the IP fax function, the control unit 402 of the STA 105 records "1" in the during-UDP-communication flag 8022. If the transmission and reception of the image by the IP fax function are completed, the control unit 402 of the STA 105 records "0" in the during-UDP-communication flag 8022. The determination of whether the STA 105 is in the UDP communication state may be made with reference to a communication setting that uses UDP. If the communication setting is enabled, the control unit 402 of the STA 105 may record "1" in the during-UDP-communication flag 8022. If the communication setting is disabled, the control unit 402 of the STA 105 may record "0" in the during-UDP-communication flag 8022.

Next, in step S614, the control unit 402 of the STA 105 determines whether the STA 105 is currently executing a job. That is, in the present example embodiment, the execution of multi-link communication is controlled based on a factor indicating whether the STA 105 is currently executing a job. If the STA 105 is currently executing a job (YES in step S614), the processing proceeds to step S616. If the STA 105 is not currently executing a job (NO in step S614), the processing proceeds to step S615. In a case where the STA 105 is an image forming apparatus such as a multifunction peripheral or a printer, a job to be executed by the STA 105 is a print job or a scan job, for example. A "print job" refers to a job for executing printing based on print data received from another STA (e.g., the STA 102). A "scan job" refers to a job for scanning a document based on a scanning instruction received from another STA or a scanning instruction received from the user by the input unit 404 of the STA 105, and transmitting image data obtained by the scanning. The presence or absence of a currently executed job may be determined with reference to, for example, information indicating that there is a currently executed job, or may be determined based on the presence or absence of a job with reference to a job queue. In step S616, the control unit 402 of the STA 105 records "1" in the job flag 8023. On the other hand, in step S615, the control unit 402 of the STA 105 records "0" in the job flag 8023.

Next, in step S617, the control unit 402 of the STA 105 determines whether the STA 105 is in the sleep state. If the STA 105 is in the sleep state (YES in step S617), the processing proceeds to step S622. If the STA 105 is not in the sleep state (NO in step S617), the processing proceeds to step S618. Since the STA 105 is an image forming apparatus such as a multifunction peripheral or a printer, there is a portion that does not need to share power in the state where the portion is not used by the user or the state where a job is not currently executed, such as a printing unit that performs printing on a paper medium (not illustrated) or a reading unit that reads a document. In such a state, the sleep state is the state where the supply of power to some of the hardware components included in the STA 105 is stopped, a clock for causing the hardware components included in the STA 105 to operate is stopped, or the frequency of the clock is lowered. That is, the sleep state is the state where the power consumption of the STA 105 is reduced. A "normal state" refers to the state where the STA 105 is not in the sleep state, and is the state where power consumption is higher than in the sleep state. Specifically, the normal state is the state where power is supplied to a greater number of hardware components than the number of hardware components to which power is supplied in the sleep state. The normal state is the state where the clock having a higher frequency than the frequency of the clock supplied to the hardware components in the sleep state is supplied to the hardware components. If the STA 105 receives a job from another apparatus via the AP 101 in the sleep state, the STA 105 transitions to the normal state and then executes processing (printing or scanning) based on the job. The sleep state can also occur in the STA 102, which is not an image forming apparatus. For example, if the STA 102 is a terminal apparatus, the STA 102 decreases the illuminance of a backlight of a display unit as one of the hardware components or turns off the backlight in the sleep state.

Such a state may also be included in the sleep state. The determination of whether the STA is in the sleep state may be made with reference to information indicating the state of the STA.

Next, in step S618, the control unit 402 of the STA 105 determines whether a condition for performing multi-link communication holds. Specifically, if at least any of the condition that the communication quality flag 8021 is "poor", the condition that the during-UDP-communication flag 8022 is "1", and the condition that the job flag 8023 is "1" is satisfied, it is determined that the multi-link communication condition holds. If none of the conditions is satisfied, it is determined that the multi-link communication condition does not hold. If the multi-link communication condition holds (YES in step S618), the processing proceeds to step S619. If the multi-link communication condition does not hold (NO in step S618), the processing proceeds to step S622. In step S619, the control unit 402 of the STA 105 acquires information indicating the frequency bands and channels in which the affiliated APs (the APs 2 and 3) other than the AP 1 that belong to the AP 101 are operating. Then, the control unit 402 of the STA 105 identifies the frequency bands and channels. The process of step S619 is similar to the process of step S605. Further, in step S620, the control unit 402 of the STA 105 switches the frequency bands and channels used for communication to the identified frequency bands and channels of the APs 2 and 3. Then, the control unit 402 of the STA 105 acquires beacon/probe response frames of the APs 2 and 3 and shares detailed information regarding each of the APs 2 and 3. The process of step S620 is similar to the process of step S606. In step S621, the control unit 402 of the STA 105 connects to the APs 1, 2, and 3 using multiple links. The process of step S621 is similar to the process of step S607.

On the other hand, in step S622, the control unit 402 of the STA 105 determines whether the STA 105 is currently connected using multiple links. This determination can be made as follows. For example, when the control unit 402 of the STA 105 makes connections using multiple links in step S607 or S621, the control unit 402 of the STA 105 sets information indicating that the STA 105 makes connections using multiple links, and then refers to the set information. As a matter of course, the control unit 402 of the STA 105 may refer to other information indicating that the STA 105 is currently connected using multiple links. If it is determined that the STA 105 is currently connected using multiple links (YES in step S622), the processing proceeds to step S623. If it is determined that the STA 105 is not currently connected using multiple links (NO in step S622), the processing proceeds to step S624. In step S623, since the multi-link communication condition does not hold, the control unit 402 of the STA 105 disconnects the connections with the APs 2 and 3 other than the AP 1. In step S624, the control unit 402 of the STA 105 connects to the AP 1, or if the control unit 402 of the STA 105 is already currently connected to the AP 1, the control unit 402 of the STA 105 does nothing.

In this manner, under the condition that the multi-link communication setting is set to "automatic", if the multi-link communication condition is satisfied, the STA 105 performs multi-link communication with the AP 101. If the multi-link communication condition is not satisfied, the STA 105 performs single-link communication with the AP 101. In this manner, it is possible to reduce the exchange of extra frames for exchanging information regarding links to the minimum necessary, reduce the overhead and the power consumption of communication, and improve the reliability of communication. Particularly unnecessary multi-link communication is not performed, whereby it is possible to prevent a resource of communication such as a channel shared with another communication apparatus in a service area from being wastefully used. Further, if the communication quality is low, multi-link communication is performed, whereby it is possible to increase the throughput. Particularly in a case where the communication quality of a channel in a particular frequency band is low, another frequency band is also used for multi-link communication, whereby it is possible to enhance the communication quality and improve the throughput. Further, while UDP communication is being performed, there is a possibility that target data is being transmitted and received. Thus, it is possible to improve the throughput by multi-link communication, and it is possible to prevent a packet from being lost. In a case where an STA is the STA 105, i.e., an image forming apparatus, multi-link communication is performed during the execution of a job in which the amount of information to be transmitted and received is great, whereby it is possible to prevent the delay of the job due to the low throughput of communication. Since there is no point in an STA in the sleep state performing multi-link communication, the STA does not perform multi-link communication in the sleep state. Thus, it is possible to further reduce power consumption.

In the procedure in Fig. 6B, in step S618, if at least any of the three determination criteria is satisfied, it is determined that the multi-link communication condition is satisfied. The determination criteria, however, are not limited to these, and another condition may be added, or any of the conditions may be replaced with another condition. Although in the above procedure, all the three determinations (steps S608, S611, and S614) based on the three determination criteria are made, the present disclosure is not limited to this form. A form may be employed in which at least one of the three determinations is made. Then, in step S618, based on the result of the determination made among the three determinations, it may be determined whether the condition for performing multi-link communication holds. Specifically, for example, the control unit 402 of the STA 105 may make only the determination in step S608 among the three determinations, whereby the processing may proceed to step S618 immediately after step S609 or S610. Alternatively, for example, the control unit 402 of the STA 105 may make only the determination in step S611 among the three determinations, whereby the processing may proceed to step S618 immediately after step S612 or S613 while steps S608 to S610 may be omitted. Yet alternatively, for example, the control unit 402 of the STA 105 may make only the determination in step S614 among the three determinations, whereby steps S608 to S613 may be omitted. Yet alternatively, for example, the control unit 402 of the STA 105 may make only the determination in step S617 among the four determinations in steps S608, S611, S614, and S617, whereby steps S608 to S616 may be omitted. The order of the three determinations is not limited to the order in the above procedure. Also, in a form in which only some of the three determinations are made, the order of some of the determinations may be any order. The processing in Figs. 6A and 6B is performed such that in the block diagram in Fig. 5, the communication quality measurement unit 505 executes the process of step S608 regarding the communication quality, and the multi-link control unit 501 executes the other steps.

In the above description, a form has been described in which in step S602, S623, or S624, only a single link is established between the STA 105 and the AP 101. The present disclosure, however, is not limited to this form. In step S602, S623, or S624, two or more links may be established between the STA 105 and the AP 101. If, however, the processing proceeds to step S602, S623, or S624, control is performed so that a smaller number of links than the number of links used for communication in a case where the processing proceeds to step S607 or S621 are used for communication. Specifically, for example, a form may be employed in which in step S602, S623, or S624, two links are established between the STA 105 and the AP 101, and in step S607 or S621, three links are established between the STA 105 and the AP 101. Then, if the processing proceeds to step S602, S623, or S624, control may be performed so that communication using the two links is executed as communication between the STA 105 and the AP 101. Then, if the processing proceeds to step S607 or S621, control may be performed so that communication using the three links is executed as communication between the STA 105 and the AP 101.

After a plurality of links is established between the STA 105 and the AP 101, the STA 105 can use only some of the plurality of links for communication while maintaining the establishment of the plurality of links. Thus, for example, a form may be employed in which three links are established between the STA 105 and the AP 101 both in step S602, S623, or S624 and in step S607 or S621. Then, if the processing proceeds to step S602, S623, or S624, control may be performed so that communication using only a single link among the three links is executed as communication between the STA 105 and the AP 101. Then, if the processing proceeds to step S607 or S621, control may be performed so that communication using the three links is executed as communication between the STA 105 and the AP 101. In the sleep state, however, the establishment of a plurality of links has few advantages. Thus, for example, in the process executed in a case where the determination is YES in step S617, control may be performed so that only a single link is established between the STA 105 and the AP 101. Then, in the process executed in a case where the determination is NO in step S618, control may be performed so that a plurality of links is established between the STA 105 and the AP 101, and only some of the plurality of links are used for communication while maintaining the establishment of the plurality of links.

Although in the above form, it is determined whether the STA 105 is in the sleep state, and the processing is switched based on the result of the determination, the present disclosure is not limited to this form. This determination (the determination in step S617) may be omitted. That is, a form may be employed in which immediately after step S615 or S616, the process of step S618 is performed. Although in the above form, the processes of steps S608 to S616 are executed, and the processing is switched based on the results of the processes, the present disclosure is not limited to this form. The processes of steps S608 to S616 and S618 may be omitted. That is, whether to execute the process of step S619 or execute the process of step S622 may be switched based only on whether the STA 105 is in the sleep state.

After the multi-link communication condition holds because the communication quality flag 8021 is "poor" and multi-link communication is executed, the STA 105 may determine the communication quality of the AP 1 again. Then, if it is determined that the communication quality of the AP 1 is poor again, the STA 105 may stop the multi-link communication and reduce the number of communication links between the AP 1 and the STA 105. Specifically, for example, the number of communication links between the AP 1 and the STA 105 may be reduced to one. This is because the execution of communication using many links despite the poor communication quality of the AP 1 is inefficient in terms of power consumption. If it is determined that the communication quality of the AP 1 is poor again, the STA 105 may display a notification screen notifying the user that the communication quality of the AP 1 is poor. For example, the notification screen is a screen urging the user to change the position of the AP 1 or the STA 105. This is because there is a high possibility that the poor communication quality of the AP 1 despite the execution of multi-link communication is caused not by the frequency bands used for communication, but by the position of the AP 1 or the STA 105.

The number of connections through which multi-link communication is performed may be determined according to the state of an STA by combining the above example embodiment. In a case where an STA is a multifunction peripheral (an image forming apparatus having multiple functions of a printer and a scanner), the amount of communication changes by the settings of the multifunction peripheral or the operating states of the functions according to the user environment. Thus, it is desirable that the number of multi-link connections be dynamically determined in the multifunction peripheral instead of being fixed. A second example embodiment illustrates processing until the number of connections through which multi-link communication is performed is determined. In the present example embodiment, in the steps other than steps S607 and S621 in the processing in Figs. 6A and 6B described in the first example embodiment, processes similar to the processes described in the first example embodiment are executed, and therefore, these steps are not described. That is, in the present example embodiment, processes specific to the present example embodiment are executed only in steps S607 and S621 in the processing in Figs. 6A and 6B described in the first example embodiment. With reference to Fig. 7, the details of the processes executed in steps S607 and S621 in the present example embodiment are described.

Processing illustrated in Fig. 7 is achieved by the control unit 402 of the STA 105, particularly the CPU of the control unit 402, executing a program stored in the storage unit 401. Although the following description is given using the STA 105 as an example, the STA 102 can also execute similar processing. In steps S701 to S707, specific individual conditions as number-of-links reduction conditions are confirmed or determined, the number of links is determined according to the conditions, and communication is performed using the determined number of links.

In step S701, the control unit 402 of the STA 105 determines whether a job currently executed by the STA 105 is a job corresponding to cloud printing. "Cloud printing " refers to the function of executing printing based on a print job received from the cloud server 111A or 111B via the Internet. In cloud printing, data for printing is downloaded to the STA 105 via the AP 101. That is, a print job received from the cloud server 111A or 111B via the Internet is a print job corresponding to cloud printing. As a print function different from cloud printing, there is a function termed local printing. "Local printing " refers to the function of executing printing based on a print job received not via the Internet from a local network to which the STA 105 belongs. In local printing, for example, the STA 105 receives a job from the STA 102. That is, a print job received not via the Internet is a print job corresponding to local printing. If it is determined that the job currently executed by the STA 105 is a job corresponding to cloud printing (YES in step S701), the processing proceeds to step S706. If it is determined that the job currently executed by the STA 105 is not a job corresponding to cloud printing (NO in step S701), the processing proceeds to step S702. Specifically, for example, the case where the job currently executed by the STA 105 is not a job corresponding to cloud printing is a case where the job currently executed by the STA 105 is a job corresponding to local printing. Alternatively, for example, the case where the job currently executed by the STA 105 is not a job corresponding to cloud printing is a case where the job currently executed by the STA 105 is a scan job or a case where there is not a job currently executed by the STA 105. In cloud printing, there is a possibility that the amount of communication increases compared to local printing due to authentication. Thus, in the present example embodiment, if a print job corresponding to cloud printing is currently executed, the number of connections through which multi-link communication is performed is increased, thereby improving the job processing speed.

In step S702, the control unit 402 of the STA 105 determines whether the amount of data of processing target data is greater than or equal to a predetermined threshold (e.g., 50 megabytes). If it is determined that the amount of data of the processing target data is greater than or equal to the predetermined threshold (YES in step S702), the processing proceeds to step S706. If it is not determined that the amount of data of the processing target data is greater than or equal to the threshold, i.e., if the amount of data of the processing target data is smaller than the threshold (NO in step S702), the processing proceeds to step S703. For example, the "processing target data" refers to data based on the job currently executed by the STA 105. More specifically, for example, the "processing target data" refers to print setting information or scan setting information included in the job, image data of a printing target, or image data obtained by scanning. In the present example embodiment, if the amount of data of the processing target data is greater than or equal to the threshold, the number of connections through which multi-link communication is performed is increased, thereby improving the job processing speed. The threshold for the amount of data is not limited to 50 megabytes. The amount of data is defined not only by the size (megabytes) of print or scan data, but also by the number of pages of a print job, and is not limited to this. For example, the amount of data may be based on the number of pages.

In step S703, the control unit 402 of the STA 105 determines whether the number of jobs held in the STA 105 is greater than or equal to a predetermined number (e.g., two). If the number of jobs held in the STA 105 is greater than or equal to the predetermined number (YES in step S703), the processing proceeds to step S706. If the number of jobs held in the STA 105 is not greater than or equal to the predetermined number (NO in step S703), the processing proceeds to step S704.

In the present example embodiment, if a plurality of jobs is held in the STA 105, the number of connections through which multi-link communication is performed is increased, thereby improving the job processing speed.

In step S704, the control unit 402 of the STA 105 confirms whether a predetermined number or more, e.g., two or more, of one or more server functions included in the STA 105 are enabled. A "server function" refers to a function in which the STA 105 operates as a server. Specifically, the server functions of the STA 105 include a remote user interface function, a Server Message Block (SMB) function, and a Wireless Direct function. The remote user interface function is a function in which the STA 105 operates as a Hypertext Transfer Protocol (HTTP) server, thereby providing an interface screen for remotely operating the STA 105 to another apparatus. The SMB function is a function in which the STA 105 operates as an SMB server, thereby enabling access to a scanned image saved in the storage unit 401 or enabling a file to be saved in the storage unit 401. The Wireless Direct function is a function in which the STA 105 operates as a Dynamic Host Configuration Protocol (DHCP) server, thereby enabling an AP in the STA 105 and directly wirelessly connecting to another apparatus not via another AP. If the number of enabled server functions is greater than or equal to two (YES in step S704), the processing proceeds to step S706. If the number of enabled server functions is less than two (NO in step S704), the processing proceeds to step S705. If a plurality of functions is enabled, there is a possibility that communication is being performed by each function. Thus, under the condition that the CPU usage rate is low, the number of connections through which multi-link communication is performed is increased, thereby improving the job processing speed.

In step S705, the control unit 402 of the STA 105 confirms whether the number of communication destination (or communication partner) servers of the STA 105 is greater than or equal to a predetermined number, e.g., greater than or equal to two. A "communication destination server" may refer to a server as a partner which the STA 105 can access via the AP 101 and with which the STA 105 communicates via the Internet. For example, the communication destination servers are a DHCP server, an SMB server, and a cloud printing server such as the cloud server 111A or 111B.

The number of communication destination servers is identified based on whether an operation log of the STA 105, counter information regarding the STA 105, or update information regarding a computer program is set so that the STA 105 communicates with servers (not illustrated). If the number of communication destination servers is greater than or equal to two (YES in step S705), the processing proceeds to step S706. If not (NO in step S705), the processing proceeds to step S707. If the number of communication destination servers is greater than or equal to two, there is a possibility that the STA 105 is communicating with each server. Thus, under the condition that the CPU usage rate is low, the number of connections through which multi-link communication is performed is increased, thereby improving the job processing speed.

If at least any of the conditions including the type of the job, the amount of data of the job, the number of jobs to be executed, the number of enabled server functions, the number of communication destination servers, and the number of always-connected servers holds, then in step S706, the control unit 402 of the STA 105 determines whether the CPU usage rate is greater than or equal to a certain value. For example, the CPU usage rate can be learned with reference to information provided by the operating system. If the CPU usage rate is greater than or equal to the certain value, the STA 105 is in the state where the processing load other than that of multi-link communication is high. Thus, even if the throughput improves by the multi-link communication, the STA 105 cannot process all the data, and only the processing load of the multi-link communication increases, which is actually inefficient. If the CPU usage rate is greater than or equal to the certain value (YES in step S706), the processing proceeds to step S707. If not (NO in step S706), the processing proceeds to step S708.

If none of the conditions including the type of the job, the amount of data of the job, the number of jobs to be executed, the number of enabled server functions, the number of communication destination servers, and the number of always-connected servers holds, then in step S707, the control unit 402 of the STA 105 connects to the APs 1 and 2 using multiple links. The same applies to the case where the CPU usage rate is greater than or equal to the certain value. That is, the STA 105 establishes two links as links with the APs 1 and 2, thereby connecting to the AP 101 in a state for executing multi-link communication. If the CPU usage rate is not greater than or equal to the certain value, then in step S708, the control unit 402 of the STA 105 connects to the APs 1, 2, and 3 using multiple links. As described above, according to the number-of-links reduction conditions, the number of links for multi-link connections is determined as either two or three, and multi-link communication is performed using the determined number of links. Although the number of links is two or three in this example, the number of links may be switched between a first number and a second number greater than the first number, and specific numbers of the first and second numbers may be other numbers. For example, if the number-of-links reduction conditions are satisfied, the number of links is set to the first number, and if the number-of-links reduction conditions are not satisfied, the number of links is set to the second number greater than the first number. Depending on the condition, the number of links may be set to a third number different from both the first and second numbers, or may be set to yet another number.

Then, in step S709, the control unit 402 of the STA 105 checks the multi-link communication setting 8012. If the multi-link communication setting 8012 is set to on, the flowchart ends. If the multi-link communication setting 8012 is set to automatic, the processing returns to the procedure in Fig. 6B. Consequently, the STA 105 can connect to the AP 101 through multi-link communication according to the multi-link communication condition by the procedure in Fig. 6B. Further, when the STA 105 connects to the AP 101 through the multi-link communication, the STA 105 can change the number of links according to the situation of communication or processing by the procedure in Fig. 7.

In this manner, in the present example embodiment, the number of connections (the number of links) through which multi-link communication is performed is set according to the state (e.g., the communication state and the processing state) of an STA, whereby it is possible to perform multi-link communication in which power consumption is reduced in the situation where the overhead is smaller, and the reliability of communication is improved.

Alternatively, the CPU usage rate may not be determined in step S706. That is, a form may be employed in which, if the determination is YES in any of steps S701 to S705, the processing immediately proceeds to step S708.

Alternatively, a form may be employed in which not all the determinations in steps S701 to S705 are made. That is, a form may be employed in which at least one of the determinations in steps S701 to S705 is made. Specifically, for example, in a form in which only the determination in step S701 is made, if the determination is YES in step S701, the processing immediately proceeds to step S706. If the determination is NO in step S701, the processing immediately proceeds to step S707. The order of determinations made among the determinations in steps S701 to S705 is not particularly limited.

In a third example embodiment, a description is given of processing executed by the STA 105 that has an automatic power-on function. The configuration of a communication network according to the present example embodiment is similar to that according to the first example embodiment, unless otherwise stated.

The "automatic power-on function" refers to a function for automatically returning the STA 105 to the normal state based on the satisfaction of a condition (an automatic return condition) for automatically returning from the sleep state to the normal state while the STA 105 is operating in the sleep state. The STA 105 receives an instruction to enable the automatic power-on function or an instruction to disable the automatic power-on function, thereby setting the automatic power-on function to enabled or disabled. The instruction to enable the automatic power-on function or the instruction to disable the automatic power-on function may be received by a user operation on the STA 105, or may be received through communication with an information processing apparatus outside the STA 105. Specifically, for example, the STA 105 receives predetermined access from an information processing apparatus to which the STA 105 is connected, thereby providing a screen for making various settings of the STA 105 to the information processing apparatus. This screen can receive an operation for enabling the automatic power-on function and an operation for disabling the automatic power-on function, and an instruction corresponding to an operation received by the screen is transmitted from the information processing apparatus to the STA 105.

If a predetermined condition (a sleep transition condition) for transitioning to the sleep state is satisfied in the state where the automatic power-on function is set to enabled, the STA 105 transitions from the normal state to a first sleep state. In the normal state, power is supplied to all the hardware components included in the STA 105. For example, the sleep transition condition includes the condition that a user operation is not performed on the STA 105 for a predetermined time or more, and the condition that the STA 105 does not process a job for a predetermined time or more. The "first sleep state" refers to the state where power consumption is smaller than in the normal state, but power is supplied to the communication unit 406, and communication based on the IEEE 802.11 standard can be executed. In the first sleep state, for example, power is also shared by the control unit 402 and a module for detecting the pressing of a power button included in the STA 105 in addition to the communication unit 406, and power is not supplied to at least one other hardware component. If the automatic return condition is satisfied while the automatic power-on function is set to enabled and the STA 105 is operating in the first sleep state, the STA 105 transitions from the first sleep state to the normal state. For example, the automatic return condition includes the condition that the STA 105 receives a job from an information processing apparatus outside the STA 105 through communication by the communication unit 406. If the STA 105 receives a job while operating in the first sleep state, the STA 105 transitions to the normal state and then processes the job. The automatic return condition may also include the condition that the STA 105 receives data other than that of a job, such as information for changing various settings of the STA 105 or a request to acquire the state of the STA 105. Also, if a manual return condition that the power button included in the STA 105 is operated is satisfied while the STA 105 is operating in the first sleep state, the STA 105 transitions from the first sleep state to the normal state.

If the sleep transition condition is satisfied in the state where the automatic power-on function is set to disabled, the STA 105 transitions from the normal state to a second sleep state. The "second sleep state" refers to the state where power consumption is smaller than in the normal state and the first sleep state, power is not supplied to the communication unit 406, and communication based on the IEEE 802.11 standard is not executed. In the second sleep state, power is shared by the control unit 402 and the module for detecting the pressing of the power button included in the STA 105, and power is not supplied to at least one other hardware component. While the STA 105 is operating in the second sleep state, the STA 105 does not execute communication based on the IEEE 802.11 standard, and therefore, the automatic return condition is not satisfied. Thus, while the STA 105 is operating in the second sleep state, the STA 105 does not automatically transition to the normal state. If the manual return condition is satisfied while the STA 105 is operating in the second sleep state, the STA 105 transitions from the second sleep state to the normal state.

As described above, the STA 105 according to the present example embodiment can operate in different sleep states and therefore executes different control regarding the number of links for multi-link communication in each sleep state. Specifically, if the sleep transition condition is satisfied in the state where the automatic power-on function is set to enabled and the state where a first number of links greater than or equal to two are established through multi-link communication, the STA 105 is controlled so that the STA 105 transitions to the first sleep state, and a smaller number of links than the first number are established. That is, some links of the first number of links are disconnected. For example, the smaller number of links than the first number are a single link. Specifically, for example, if connections with the APs 1, 2, and 3 are established by the STA 105 in the normal state, the connections with the APs 2 and 3 other than the AP 1 are disconnected according to the satisfaction of the sleep transition condition. The smaller number of links than the first number may only need to be established based on the IEEE 802.11 standard, and may not be established by the multi-link communication function.

Then, if the sleep transition condition is satisfied in the state where the automatic power-on function is set to disabled and the state where the first number of links are established, the STA 105 is controlled so that the STA 105 transitions to the second sleep state, and links are not established through multi-link communication. That is, all the links of the first number of links are disconnected. Specifically, for example, if connections with the APs 1, 2, and 3 are established by the STA 105 in the normal state, the connections with the APs 1, 2, and 3 are disconnected according to the satisfaction of the sleep transition condition. This is because, as described above, wireless communication is not executed in the second sleep state. Alternatively, the STA 105 may not disconnect the first number of links in compliance with the multi-link communication standard, but may disconnect the first number of links by turning off a wireless function according to the transition to the second sleep state.

Also in the present example embodiment, the processing described with reference to Figs. 6A, 6B, and 7 in the first example embodiment may be executed. Although the processing of the flowcharts in Figs. 6A and 6B is started when the STA 105 starts to try connecting to the AP 101, since wireless communication is not executed in the second sleep state as described above, the processing of the flowcharts in Figs. 6A and 6B is executed in the normal state or the first sleep state.

In a fourth example embodiment, a description is given of the process of referring to not only the communication quality of communication between the AP 1 and the STA 105, but also the communication quality of communication between the AP 1 and the STA 102. The configuration of a communication network according to the present example embodiment is similar to that according to the first example embodiment, unless otherwise stated.

In the present example embodiment, first, in step S608, similarly to the first example embodiment, the control unit 402 of the STA 105 determines whether the communication quality of communication between the AP 1 and the STA 105 (hereinafter, a "communication quality 1") is poor. Then, if it is determined that the communication quality 1 is poor, the control unit 402 of the STA 105 determines whether the communication quality of communication between the AP 1 and the STA 102 (hereinafter, a "communication quality 2") is poor. That is, in the present example embodiment, the execution of multi-link communication is controlled based not only on a factor indicating the communication quality 1, but also on a factor indicating the communication quality 2. In the determination regarding the communication quality 2, first, the control unit 402 of the STA 105 acquires information regarding the communication quality 2 from the STA 102 via the AP 1. For example, the information regarding the communication quality 2 is information indicating an RSSI based on a radio wave transmitted from the AP 1 and received by the STA 102. Then, if the RSSI indicated by the information is equal to or exceeds the threshold when the MCS 0 is used, it is determined that the communication quality 2 is excellent. If the communication quality 2 is excellent, it is possible to enhance communication between the STAs 105 and 102 by enhancing the communication quality 1 by multi-link communication. Thus, if it is determined that the communication quality 2 is excellent, the processing proceeds to step S609. In step S609, the control unit 402 of the STA 105 performs control so that the multi-link communication condition holds based on the factors regarding the communication qualities. If, on the other hand, the RSSI indicated by the information regarding the communication quality 2 falls below the threshold when the MCS 0 is used, it is determined that the communication quality 2 is poor. Also, if the information regarding the communication quality 2 is not acquired, it is determined that the communication quality 2 is poor. If the communication quality 2 is poor, communication between the STAs 105 and 102 may not be enhanced even by enhancing the communication quality 1 using multi-link communication. Thus, if it is determined that the communication quality 2 is poor, the processing proceeds to step S610. In step S610, the control unit 402 of the STA 105 performs control so that the multi-link communication condition does not hold based on the factors regarding the communication qualities. That is, in the present example embodiment, if the communication quality 1 is excellent, the processing proceeds to step S609, regardless of whether the communication quality 2 is excellent. In step S609, the control unit 402 of the STA 105 performs control so that the multi-link communication condition holds. If the communication quality 1 is not excellent and the communication quality 2 is not excellent, the processing proceeds to step S610. In step S610, the control unit 402 of the STA 105 performs control so that the multi-link communication condition does not hold based on the factors regarding the communication qualities. If the communication quality 1 is not excellent and the communication quality 2 is excellent, the processing proceeds to step S609. In step S609, the control unit 402 of the STA 105 performs control so that the multi-link communication condition holds based on the factors regarding the communication qualities. Even if the processing proceeds to step S610, control may be performed so that the multi-link communication condition holds based on the factor indicating whether the STA 105 is in the UDP communication state or the factor indicating whether the STA 105 is currently executing a job.

The determination regarding the communication quality 2 is not limited to the above form. For example, a form may be employed in which, as the information regarding the communication quality 2, information indicating the result of determining whether the communication quality 2 is poor by the STA 102 is received by the STA 105. In this form, based on information indicating a received signal strength indicator based on a radio wave transmitted from the AP 1 and received by the STA 102 and the above threshold, the STA 102 determines whether the communication quality 2 is poor. Alternatively, a form may be employed in which the information regarding the communication quality 2 is received by the STA 105 through communication between the STAs 105 and 102 not via the AP 1. For example, the communication between the STAs 105 and 102 not via the AP 1 is communication using Bluetooth.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc^{™} (BD)), a flash memory device, a memory card, and the like.

Whilst the present disclosure has been described with reference to example embodiments, it is to be understood that the disclosure is not limited to the disclosed example embodiments. The scope of the following claims encompasses all such modifications and equivalent structures and functions.

## Claims

1. A communication apparatus that operates in any of a plurality of states including a first state, a second state in which power consumption is smaller than in the first state, and a third state in which power consumption is smaller than in the first and second states, the communication apparatus comprising:
a setting means for setting a predetermined function to enabled or disabled;
a communication means for communicating using a communication module configured to execute communication compliant with an Institute of Electrical and Electronics Engineers (IEEE) 802.11 series standard; and
a first control means for controlling the communication apparatus,
wherein the first control means is configured to control, based on satisfaction of a predetermined condition for transitioning to a state in which power consumption is smaller than in the first state, in a state in which the communication apparatus is operating in the first state, a plurality of communication links having links of a first number through multi-link communication compliant with an IEEE 802.11be standard are established between the communication module and an external apparatus, and the predetermined function is set to enabled, the communication apparatus so that the communication apparatus operates in the second state and one or more communication links having links of a second number smaller than the first number are established between the communication module and the external apparatus; and
wherein the first control means is configured to control, based on the satisfaction of the predetermined condition in a state in which the communication apparatus is operating in the first state, the plurality of communication links having links of the first number are established between the communication module and the external apparatus, and the predetermined function is set to disabled, the communication apparatus so that the communication apparatus operates in the third state and a communication link is not established between the communication module and the external apparatus.

2. The communication apparatus according to claim 1, further comprising a second control means for controlling, after the communication apparatus is controlled so that the communication apparatus operates in the second state and the one or more communication links having links of the second number are established between the communication module and the external apparatus, and based on execution of communication using the one or more communication links having links of the second number, the communication apparatus so that the communication apparatus operates in the first state and the plurality of communication links having links of the first number through the multi-link communication are established between the communication module and the external apparatus.

3. The communication apparatus according to claim 1, further comprising a third control means for controlling, after the communication apparatus is controlled so that the communication apparatus operates in the third state and a communication link is not established between the communication module and the external apparatus, and based on an operation on a power button of the communication apparatus, the communication apparatus so that the communication apparatus operates in the first state and the plurality of communication links having links of the first number through the multi-link communication are established between the communication module and the external apparatus.

4. The communication apparatus according to any one of claims 1 to 3, wherein the predetermined condition includes continuation of a state in which an operation is not performed on the communication apparatus for a predetermined time or more.

5. The communication apparatus according to any one of claims 1 to 4,
wherein the second state is a state in which power is supplied to the communication module, and
wherein the third state is a state in which power is not supplied to the communication module.

6. The communication apparatus according to any one of claims 1 to 5, further comprising a fourth control means for controlling, in a case in which the communication apparatus is operating in the first state, and based on another factor different from a factor indicating whether the communication apparatus is in a sleep state, the communication apparatus so that the plurality of communication links having links of the first number through the multi-link communication are established between the communication module and the external apparatus, or controlling the communication apparatus so that one or more communication links having links of a third number smaller than the first number are established between the communication module and the external apparatus; optionally wherein the third number is the same as the second number.

7. The communication apparatus according to claim 6,
wherein the another factor includes a communication quality of communication using at least one link between the external apparatus and the communication apparatus,
wherein based on a state in which the communication quality is a first quality, the communication apparatus is controlled so that the one or more communication links having links of the third number are established between the communication module and the external apparatus, and
wherein based on a state in which the communication quality is a second quality poorer than the first quality, the communication apparatus is controlled so that the plurality of communication links having links of the first number through the multi-link communication are established between the communication module and the external apparatus.

8. The communication apparatus according to claim 6 or 7,
wherein the another factor includes a factor indicating whether the communication apparatus is currently executing a print job or a scan job,
wherein based on a state in which the communication apparatus is not currently executing a print job or a scan job, the communication apparatus is controlled so that the one or more communication links having links of the third number are established between the communication module and the external apparatus, and
wherein based on a state in which the communication apparatus is currently executing a print job or a scan job, the communication apparatus is controlled so that the plurality of communication links having links of the first number through the multi-link communication are established between the communication module and the external apparatus.

9. The communication apparatus according to any one of claims 6 to 8,
wherein the another factor includes a factor indicating whether the communication apparatus is in a state in which the communication apparatus is executing User Datagram Protocol (UDP) communication,
wherein based on a state in which the communication apparatus is in a state in which the communication apparatus is not executing UDP communication, the communication apparatus is controlled so that the one or more communication links having links of the third number are established between the communication module and the external apparatus, and
wherein based on a state in which the communication apparatus is in the state in which the communication apparatus is executing UDP communication, the communication apparatus is controlled so that the plurality of communication links having links of the first number through the multi-link communication are established between the communication module and the external apparatus.

10. The communication apparatus according to any one of claims 1 to 9, wherein the communication apparatus operates as a station in the multi-link communication.

11. The communication apparatus according to any one of claims 1 to 10, wherein the plurality of communication links having links of the first number includes a communication link using a first frequency band and a communication link using a second frequency band different from the first frequency band; and/or wherein the plurality of communication links having links of the first number include a communication link using a 6 GHz frequency band; and/or wherein the second number is one.

12. The communication apparatus according to any one of claims 1 to 14,
wherein based on reception of an instruction to enable the predetermined function or an instruction to disable the predetermined function, the predetermined function is set to enabled or disabled, and wherein the instruction to enable the predetermined function or the instruction to disable the predetermined function is received by at least one of
a user operation on the communication apparatus; and
communication with an information processing apparatus outside the communication apparatus.

13. The communication apparatus according to any one of claims 1 to 16, further comprising printing means for executing printing.

14. A control method for controlling a communication apparatus that operates in any of a plurality of states including a first state, a second state in which power consumption is smaller than in the first state, and a third state in which power consumption is smaller than in the first and second states, the control method comprising:
setting a predetermined function to enabled or disabled;
communicating using a communication module configured to execute multi-link communication compliant with an IEEE 802.11be standard; and
based on satisfaction of a predetermined condition for transitioning to a state where power consumption is smaller than in the first state in a state in which the communication apparatus is operating in the first state, a plurality of communication links having links of a first number through the multi-link communication are established between the communication module and an external apparatus, and the predetermined function is set to enabled, controlling the communication apparatus so that the communication apparatus operates in the second state and one or more communication links having links of a second number smaller than the first number are established between the communication module and the external apparatus through the multi-link communication, and
based on the satisfaction of the predetermined condition in a state in which the communication apparatus is operating in the first state, the plurality of communication links having links of the first number are established between the communication module and the external apparatus, and the predetermined function is set to disabled, controlling the communication apparatus so that the communication apparatus operates in the third state and a communication link is not established between the communication module and the external apparatus through the multi-link communication.

15. A program for causing a computer of a communication apparatus that operates in any of a plurality of states including a first state, a second state in which power consumption is smaller than in the first state, and a third state in which power consumption is smaller than in the first and second states to:
set a predetermined function to enabled or disabled;
communicate using a communication module configured to execute multi-link communication compliant with an IEEE 802.11be standard; and
based on satisfaction of a predetermined condition for transitioning to a state in which power consumption is smaller than in the first state in a state in which the communication apparatus is operating in the first state, a plurality of communication links having links of a first number through the multi-link communication are established between the communication module and an external apparatus, and the predetermined function is set to enabled, control the communication apparatus so that the communication apparatus operates in the second state and one or more communication links having links of a second number smaller than the first number are established between the communication module and the external apparatus through the multi-link communication, and
based on the satisfaction of the predetermined condition in a state in which the communication apparatus is operating in the first state, the plurality of communication links having links of the first number are established between the communication module and the external apparatus, and the predetermined function is set to disabled, control the communication apparatus so that the communication apparatus operates in the third state and a communication link is not established between the communication module and the external apparatus through the multi-link communication.
